# EUROPEAN PATENT APPLICATION

(11) **EP 1 571 573 A1**
(43) Date of publication of application: **07.09.2005**
(21) Application number: 05002704.4
(22) Date of filing: 09.02.2005
(51) Int. Cl.: G06F 17/60

(54) **Device and method for informing of mail arrival**

(30) Priority: 01.03.2004 JP 2004056008
(71) Applicant: NEC CORPORATION, Tokyo (JP)
(72) Inventor: Nakai, Yasuhiro, Minato-ku Tokyo (JP)
(74) Representative: Glawe, Delfs, Moll

(57) **Abstract**

A header information analyzing unit that analyzes header information of an e-mail received by amail receiving unit includes a destination determining unit that determines whether the received e-mail is directed to a specific address for a receiver of the e-mail or directed to multiple addresses including the receiver's mail address, and an address entry determining unit that refers to an address book based on the header information and determines whether a mail address of a mail transmission source is recorded in the address book. When the determination result of the destination determining unit shows the specific address, a first incoming mail sound is output from an incoming mail sound outputting unit to inform of mail arrival, and when the determination result of the destination determining unit shows the multiple addresses, a second incoming mail sound is output from the incoming mail sound outputting unit to inform of mail arrival. Furthermore, on the basis of the determination result of the address entry determining unit, when the mail address is recorded, first light emission is provided by an incoming mail light emitting unit to inform of mail arrival, and when themail address is not recorded, second light emission is provided by the incomingmail light emitting unit to inform of mail arrival. Therefore, it is possible to determine whether a received e-mail is TO mail or CC (BCC) mail in accordance with the difference in incoming mail sound, and is also possible to easily identify whether the mail address of the mail transmission source is recorded in the address book in accordance with the difference in incoming mail light.

## Description

### BACKGROUND OF THE INVENTION

### Field of the Invention

The present invention relates to a device and method for informing a user of portable communication terminals (such as a portable telephone) or information processing terminals (such as a personal computer), which have the capability of transmitting/receiving e-mails, about the arrival of an e-mail received by these terminals.

### Description of the Prior Art

Conventional mail receiving units provided in the above sorts of terminals, which are capable of distinguishing whether a received e-mail is directed to a specific address for a receiver of the e-mail (hereinafter, referred to as "TO mail") or directed to multiple addresses including the receiver's mail address (hereinafter, referred to as "CC mail"), classify and store received e-mails appropriately into a TO mail box and a CC mail box provided for each client in a mail box. For example, see Patent Document 1 (Japanese Patent Laid-Open No. 10-065730) and Patent Document 2 (Japanese Patent Laid-Open No. 2003-60708).

For this reason, it is not recognizable whether a received mail is TO mail or CC mail before checking an incoming mail tray.

Conventional techniques for changing mail arrival notification patterns in accordance with types of received e-mails are disclosed in the following patent documents.

Patent Document 3 (Japanese Patent Laid-Open No. 2001-282635) discloses a technique of storing in advance melodies corresponding to their respective types of e-mails in a table and changing a melody to be output depending on the type of a received e-mail.

Patent Document 4 (Japanese Patent Laid-Open No. 2002-244980) discloses a technique of determining whether a received mail is a reply mail or forwarded mail on the basis of the title of the received mail, and changing an incoming mail sound depending on whether a received mail is a replay or forwarded mail.

Patent Document 5 (Japanese Patent Laid-Open No. 2002-41414) discloses a technique of determining the level of importance of a received mail by extracting information therefrom, and informing of mail arrival with incoming mail sound volume corresponding to the importance level.

There has been, however, neither device nor method which allows users to easily determine whether a received e-mail is TO mail or CC (BCC) mail.

### BRIEF SUMMARY OF THE INVENTION

Therefore, a first object of the present invention is to allow users to determine whether a received mail is TO mail or CC (BCC) mail in accordance with the difference in incoming mail sound.

A second object of the present invention is to allow users to easily identify whether a mail address of a mail transmission source is recorded in an address book in accordance with the difference in incoming mail light.

A third object of the present invention is to enable forwarding of high-importance mails determined to be TO mail toward a designated address.

In order to achieve the first object, a mail arrival informing device according to the present invention comprises: a destination determining means that analyzes header information of an e-mail received by a receiving unit and determines whether the received e-mail is directed to a specific address for a receiver of the e-mail or directed to multiple addresses including a mail address of the receiver; and an incoming mail sound outputting means that informs of mail arrival by outputting a first incoming mail sound when the determination result of the destination determining unit shows the specific address, and informs of mail arrival by outputting a second incoming mail sound when the determination result of the destination determining unit shows the multiple addresses.

In order to achieve the second object, the mail arrival informing device according to the present invention further comprises: an address entry determining means that refers to an address book based on the header information of the e-mail received by the receiving unit and determines whether a mail address of a mail transmission source is recorded in the address book; and an incoming mail light emitting means that indicates mail arrival by first light emission when the mail address of the mail transmission source is recorded in the address book and indicates mail arrival by second light emission when the mail address of the mail transmission source is not recorded in the address book.

In order to achieve the third object, the mail arrival informing device according to the present invention further comprises: an importance level determining means that determines the level of importance of an e-mail directed to the specific address in accordance with the header information; and a mail transmitting means that forwards the e-mail of high importance directed to the specific address toward a predesignated forwarding address.

Furthermore, in order to achieve the first object, a method of informing of mail arrival according to the present invention comprises: a destination determining step of analyzing header information of an e-mail received by a receiving unit and determining whether the received e-mail is directed to a specific address for a receiver of the e-mail or directed to multiple addresses includingamail address of the receiver; and an incoming mail sound outputting step of informing of mail arrival by outputting a first incoming mail sound when the determination result in the destination determining step shows the specific address, and informing of mail arrival by outputting a second incoming mail sound when the determination result in the destination determining step shows the multiple addresses.

In order to achieve the second object, the method of informing of mail arrival according to the present invention further comprises: an address entry determining step of referring to an address book based on the header information of the e-mail received by the receiving unit and determining whether a mail address of a mail transmission source is recorded in the address book; and an incoming mail light emitting step of indicating mail arrival by first light emission when the mail address of the mail transmission source is recorded in the address book and indicating mail arrival by second light emission when the mail address of the mail transmission source is not recorded in the address book.

In order to achieve the third object, the method of informing of mail arrival according to the present invention further comprises: an importance level determining step of determining the level of importance of an e-mail directed to the specific address in accordance with the header information; and a mail transmitting step of forwarding the e-mail of high importance directed to the specific address toward a predesignated forwarding address.

According to the present invention, it is possible to determine whether a received e-mail is TO mail or CC (BCC) mail, before checking the text of the e-mail in accordance with the difference in incoming mail sound.

Furthermore, since it is possible to identify whether a mail address of a mail transmission source is recorded in an address book in accordance with the difference in colors of incoming mail light, it is convenient to determine the presence of the need to immediately check the text of a received e-mail and to determine whether a received e-mail is an undesired e-mail such as an unsolicited bulk e-mail.

Moreover, since it is possible to forward TO mails of high importance toward a forwarding address, these high-importance e-mails received by one terminal can be checked by another terminal.

### BRIEF DESCRIPTION OF THE DRAWINGS

FIG. 1 is a block diagram showing a configuration of a mail arrival informing device according to a first embodiment of the present invention;
FIG. 2 is a flowchart of operations of the mail arrival informing device of FIG. 1; and
FIG. 3 is a block diagram showing a configuration of a mail arrival informing device according to a second embodiment of the present invention.

### DETAILED DESCRIPTION OF THE PREFERRED EMBODIMENTS

Referring now to the accompanying drawings, the preferred embodiments of the present invention will be described in detail below.

### (First Embodiment)

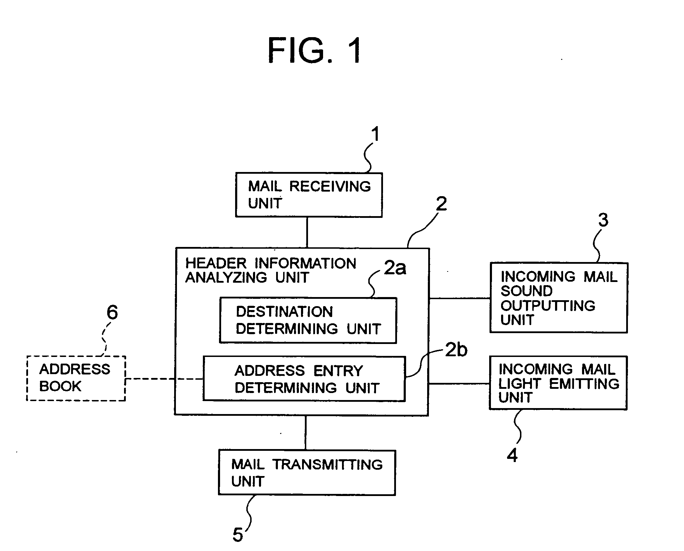

A mail arrival informing device according to a first embodiment of the present invention comprises, as shown by the block diagram in FIG. 1, a mail receiving unit 1 that receives e-mails, a header information analyzing unit 2 that analyzes header information of an e-mail received by the mail receiving unit 1, an incoming mail sound outputting unit 3 that informs of mail arrival by outputting sound, an incoming mail light emitting unit 4 that informs of mail arrival by emitting light, and a mail transmitting unit 5 that transmits e-mails.

The header information analyzing unit 2 is provided with a destination determining unit 2a that analyzes the header information of the received e-mail and determines whether it is directed to a specific address for a receiver of the e-mail, i.e., TO mail, or directed to multiple addresses including the receiver's mail address, i.e., CC (BCC) mail, and an address entry determining unit 2b that refers to an address book based on the header information and determines whether a mail address of a mail transmission source is recorded in an address book 6.

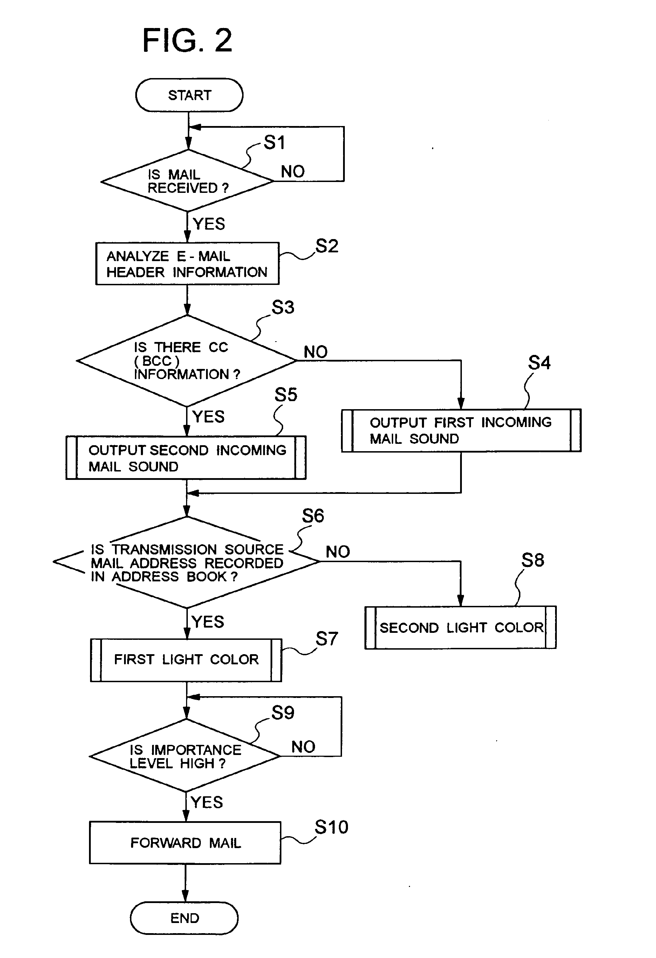

Next, operations of the mail arrival informing device will be described with reference to the flowchart of FIG. 2.

In FIG. 1, when an e-mail is received by the mail receiving unit 1 (step S1), the header information analyzing unit 2 analyzes the header information (step S2). The header information analyzing unit 2 determines at the destination determining unit 2a whether the received e-mail is a TO mail or CC (BCC) mail (step S3). When the received e-mail is TO mail, a first incoming mail sound is outputted from the incoming mail sound outputting unit 3 (step S4), and when the received e-mail is CC (BCC) mail, a second incoming mail sound is output from the incoming mail sound outputting unit 3 (step S5).

Furthermore, the header information analyzing unit 2 determines at the address entry determining unit 2b whether a mail address of a mail transmission source is recorded in the address book 6 (step S6). When this mail address is recorded in the address book 6, an LED of the incoming mail light emitting unit 4 is illuminated in a first color (step S7), and when the mail address is not recorded in the address book 6, the LED of the incoming mail light emitting unit 4 is illuminated in a second color (step S8).

Thus, in this embodiment, the incoming mail sound changes depending on whether a received e-mail is TO mail or CC (BCC) mail, and the incoming mail light color also changes depending on whether a mail address of a mail transmission source is recorded in the address book, thereby making it possible to recognize the level of importance of the received e-mail before checking the text of the e-mail.

### (Second Embodiment)

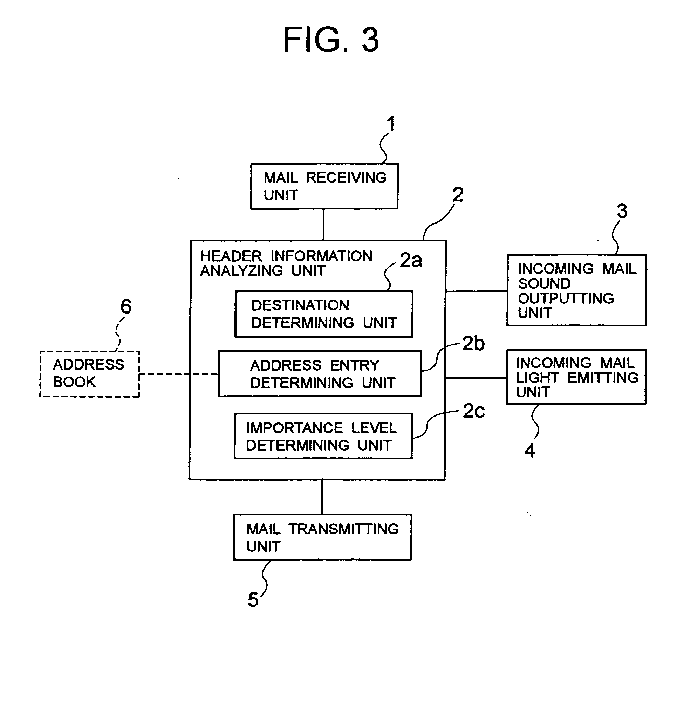

A second embodiment of the present invention is basically the same as the first embodiment, but employs a further devised technique for informing of mail arrival. FIG. 3 shows a configuration thereof. In this second embodiment, the header information analyzing unit 2 is further provided with an importance level determining unit 2c that, when a received e-mail is TO mail as a result of the determination as previously described, determines the level of importance of the received e-mail based on the header information. When the received e-mail is of high importance (step S9), the mail transmitting unit 5 forwards the received e-mail to a predesignated forwarding address (another terminal) (step S10).

As described above, in this embodiment, only a TO mail of high importance is forwarded to another terminal, which advantageously enables receipt of only high-importance mails with another terminal.

## Claims

1. A mail arrival informing device comprising:
destination determination means for analyzing header information of an e-mail received by a receiving unit and determining whether the received e-mail is directed to a specific address for a receiver of the e-mail or directed to multiple addresses including a mail address of the receiver; and
incoming mail sound output means for informing of mail arrival by outputting a first incoming mail sound when the determination result of the destination determination means shows the specific address, and informing of mail arrival by outputting a second incoming mail sound when the determination result of the destination determination means shows the multiple addresses.

2. The mail arrival informing device according to claim 1, further comprising:
address entry determination means for referring to an address book based on the header information of the e-mail received by the receiving unit and determining whether a mail address of a mail transmission source is recorded in the address book; and
incoming mail light emission means for indicating mail arrival by first light emission when the mail address of the mail transmission source is recorded in the address book and indicating mail arrival by second light emission when the mail address of the mail transmission source is not recorded in the address book.

3. The mail arrival informing device according to claim 1, further comprising:
importance level determination means for determining the level of importance of an e-mail directed to the specific address in accordance with the header information; and
mail transmission means for forwarding the e-mail of high importance directed to the specific address toward a predesignated forwarding address.

4. The mail arrival informing device according to claim 2, further comprising:
importance level determination means for determining the level of importance of an e-mail directed to the specific address in accordance with the header information; and
mail transmission means for forwarding the e-mail of high importance directed to the specific address toward a predesignated forwarding address.

5. A method of informing of mail arrival comprising:
a destination determining step of analyzing header information of an e-mail received by a receiving unit and determining whether the received e-mail is directed to a specific address for a receiver of the e-mail or directed to multiple addresses including a mail address of the receiver; and
an incoming mail sound outputting step of informing of mail arrival by outputting a first incoming mail sound when the determination result in the destination determining step shows the specific address, and informing of mail arrival by outputting a second incoming mail sound when the determination result in the destination determining step shows the multiple addresses.

6. The method of informing of mail arrival according to claim 5, further comprising:
an address entry determining step of referring to an address book based on the header information of the e-mail received by the receiving unit and determining whether a mail address of a mail transmission source is recorded in the address book; and
an incoming mail light emitting step of indicating mail arrival by first light emission when the mail address of the mail transmission source is recorded in the address book and indicating mail arrival by second light emission when the mail address of the mail transmission source is not recorded in the address book.

7. The method of informing of mail arrival according to claim 5, further comprising:
an importance level determining step of determining the level of importance of an e-mail directed to the specific address in accordance with the header information; and
a mail transmitting step of forwarding the e-mail of high importance directed to the specific address toward a predesignated forwarding address.

8. The method of informing of mail arrival according to claim 6, further comprising:
an importance level determining step of determining the level of importance of an e-mail directed to the specific address in accordance with the header information; and
a mail transmitting step of forwarding the e-mail of high importance directed to the specific address toward a predesignated forwarding address.
